# EUROPÄISCHE PATENTSCHRIFT

(11) **EP 1 388 484 B1**
(45) Veröffentlichungstag und Bekanntmachung des Hinweises auf die Patenterteilung: **12.12.2007**
(21) Anmeldenummer: 03400024.0
(22) Anmeldetag: 16.05.2003
(51) Int. Cl.: B62D 15/02

(54) **Lenkstockmodul**
Steering column module
Module de colonne de direction

(30) Priorität: 07.08.2002 DE 10236142
(43) Veröffentlichungstag der Anmeldung: 11.02.2004
(73) Patentinhaber: Valeo Schalter und Sensoren GmbH, 74321 Bietigheim-Bissingen (DE)
(72) Erfinder: Grüner, Roland, 71732 Tamm (DE); Bosch, Jürgen, 86757 Wallerstein (DE)
(74) Vertreter: Bulling, Alexander

(56) Entgegenhaltungen:
- EP-A- 0 860 330
- EP-A- 0 913 319
- DE-A- 4 009 007

## Beschreibung

Die Erfindung betrifft ein Lenkstockmodul für ein Fahrzeug, mit einem Grundgehäuse, mit einem mit der Drehbewegung eines Lenkrades des Fahrzeuges koppelbaren Rotor, wobei der Rotor am Grundgehäuse drehbar gelagert ist und wobei das Lenkstockmodul einen Lenkwinkelsensor umfasst, der ein mit dem Rotor drehfest gekoppeltes Codierelement aufweist.

Lenkwinkelsensoren umfassen in der Regel ein mit der Drehbewegung des Lenkrades bzw, der Lenksäule gekoppeltes Codierelement und eine der Drehbewegung nicht folgende, ortsfest angeordnete Abtasteinheit, die die jeweilige Winkelstellung des Codierelements erfasst. Das der Drehbewegung folgende Codierelement ist hierbei in einem Sensorgehäuse gelagert. Lenkwinkelsensoren dienen zur Bestimmung der jeweiligen Lenkradstellung, aufgrund derer auf die Einschlagwinkel der lenkbaren Räder des Fahrzeuges geschlossen wird. Der Lenkwinkel ist für eine Vielzahl von Fahrzeugsystemen erforderlich, beispielsweise für Brems-, Stabilisierungs-, Navigations-, Kollisionvermeidungs- und/oder automatische Lenksysteme.

Im Bereich des Lenkrades bzw. der Lenkstocks sind bei modernen Fahrzeugen eine Vielzahl von Einrichtungen angeordnet. Beispielsweise sind neben Lenkwinkelsensoren und Lenkstockschaltern auch Wickelbänder, auch als Wickelfedern oder als Kontaktspiralen bezeichnet, spiralförmig um die Lenkachse bzw. Lenksäule des Fahrzeuges angeordnet. Das eine Ende eines solchen Wickelbandes ist über einen Rotor an dem drehbaren Lenkrad bzw. an der Lenksäule und das andere Ende ist ortsfest an beispielsweise einem Gehäuse angeordnet. Ein solches Wickelband dient dazu, am Lenkrad vorhandene Schalter, Sensoren oder sonstige elektrische oder elektronische Bauteile, die mit dem Lenkrad drehfest verbunden sind, mittels elektrischer Leitungen mit anderen elektrischen oder elektronischen Bauteilen zu verbinden, die nicht der Drehbewegung des Lenkrades folgen. Dazu weist ein Wickelband in der Regel eine Vielzahl von nebeneinander liegenden, gegenseitig isolierten Leiterbahnen auf. Bei der Drehung des Lenkrades wird die spiralförmig angeordnete Wickelfeder je nach Drehrichtung aufgewickelt oder abgewickelt. Die Wickelfeder ist dabei so ausgelegt, dass sie das Lenkverhalten des Lenkrades nicht beeinträchtigt. Im Lenkstockbereich eines Fahrzeuges herrschen grundsätzlich sehr beengte Platzverhältnisse.

Aus der DE 40 09 007 A1 ist ein Lenkwinkelsensor bekannt geworden, bei dem ein einen Code aufweisender Rotor unmittelbar drehfest an der Lenkwelle angeordnet ist. Weder ein Lenkstockmodul, noch ein an einem Gehäuse drehbar gelagerter Rotor im Sinne des Anspruchs 1 ist diesem Dokument zu entnehmen.

Aus der EP 0913 319 A2 ist eine Lenkwinkelsensoreinheit bekannt geworden, bei der eine Schraubenfeder zwischen zwei rotorseitigen Drehelementen angeordnet ist und die beiden Drehelemente in Richtung einer Trennung voneinander elastisch vorspannt. Dadurch werden die beiden Drehelemente gegen feststehende Gehäuseteile in axialer Richtung verspannt.

Der vorliegenden Erfindung liegt die Aufgabe zugrunde, ein Lenkstockmodul bereitzustellen, das zum einen sehr kompakt baut und das zum anderen eine sichere Lagerung des Rotors gewährleistet. Insbesondere soll der Rotor hierbei in axialer Richtung weitgehend spielfrei gelagert sein.

Die Erfindung zeichnet sich durch ein Lenkstockmodul mit den Merkmalen des Anspruchs 1 aus. Das Vorsehen von als Federzungen ausgebildeten, gegen einen lenkradseitigen Anlageabschnitt wirkenden Federelemente hat den Vorteil, dass ein gegebenenfalls vorhandenes Axialspiel ausgeglichen wird, wodurch das Codierelement in einer vordefinierten und positionsgenauen Lage innerhalb des Gehäuses gehalten wird. Aufgrund der axialspielfreien Anordnung des Codierelements ist eine exakte Abtastung durch ein Sensorelement des Lenkwinkelsensors möglich; der Lenkwinkel lässt sich folglich sehr genau bestimmen.

Der Rotor wird dabei durch die Federelemente in axialer Richtung gegen einen definierten Lagerabschnitt am Grundgehäuse beaufschlagt. Der Lagerabschnitt kann hierbei beispielsweise als ein den Rotor umgebender Ring, als ein oder mehrere Ringsegmente oder als Auflagestege für den Rotor ausgebildet sein.

Der lenkradseitige Anlageabschnitt folgt dabei der Drehbewegung des Lenkrades. Es gibt dann keine Relativbewegung zwischen dem Rotor und dem Lenkrad bzw. dem Anlageabschnitt. Dadurch können keine Geräusche zwischen dem Rotor und dem Lenkrad bzw. dem Anlageabschnitt auftreten. Ein derartiges Lenkstockmodul führt zu einem sehr geräuscharmen Betrieb.

Erfindungsgemäß sind die Federelemente als Federzungen ausgebildet, die sich insbesondere in Draufsicht (Blickrichtung entlang der Längsachse) in radialer Richtung erstrecken und in Seitenansicht (Blickrichtung orthogonal zur Längsachse) insbesondere unter einem Winkel von 5° bis 85° senkrecht zur Längsachse angeordnet sind. Im eingebauten Zustand des Lenkstockmoduls liegen die Federzungen an dem Lenkrad bzw. dem Anlageabschnitt an. Der Winkel beträgt dann vorteilhafterweise einen Wert von größer 0°.

Ferner ist vorteilhaft, wenn der Rotor aus Kunststoff geformt ist und wenn die Federelemente an den Rotor angeformt sind. Der Rotor mit den Federelementen kann hierbei in einem Herstellungsprozess, beispielsweise durch Spritzgießen, gefertigt werden.

Ein vorteilhaftes Lenkstockmodul ergibt sich dann, wenn insgesamt drei oder mehr, insbesondere äquidistant zueinander angeordnete, Federelemente vorgesehen sind. Hierdurch wird erreicht, dass der Rotor gleichmäßig in axialer Richtung vorgespannt ist. Einem Verkanten des Rotors wird damit entgegengewirkt.

Eine weitere, ebenfalls besonders bevorzugte Ausführungsform der Erfindung zeichnet sich dadurch aus, dass das Codierelement als Codescheibe einstückig aus insbesondere einem metallischen Werkstoff, der nicht mit Kunststoff umspritzt ist, gebildet ist. Die Codescheibe besteht folglich lediglich aus Metall.

Dies hat den Vorteil, dass das Codierelement kostengünstig und insbesondere in einem Fertigungsprozess hergestellt werden kann. Bekannte Codescheiben werden beispielsweise aus kunststoffummanteltem Metall hergestellt. Hierzu wird beispielsweise die Codescheibe zunächst zur Realisierung des Codes bearbeitet. Dies kann beispielsweise durch Stanzen oder Schneiden passieren. In einem nächsten Arbeitsschritt werden dann Abschnitte der Codescheibe mit Kunststoff umspritzt. Es hat sich gezeigt, dass nach dem Umspritzen der Codescheibe diese sich häufig verzieht. Bei der Abtastung der Codescheibe ist allerdings von großer Bedeutung, dass die Codescheibe in einer Ebene liegt. Eine nicht exakt ebene Codescheibe kann zu falschen Abtastergebnissen und damit zu falschen erfassten Lenkwinkeln führen.

Die Verwendung einer nicht kunststoffumspritzten metallischen Codescheibe hat den Vorteil, dass die Codescheibe zum einen kostengünstig in ihrer Herstellung ist; zum anderen kann gewährleistet werden, dass die Codescheibe exakt plan ausgebildet sein kann. Eine ebene Codescheibe hat ferner den Vorteil, dass kein Schleifen der Codescheibe an umliegenden Bauteilen auftreten kann. Es hat sich nämlich immer wieder gezeigt, dass verzogene Codescheiben zu einem unerwünschten Berührkontakt mit die Codescheibe umgebenden Bauteilen führen können. Ein derartiger Berührkontakt führt neben einer verfälschten Erfassung des Codes zu einer unerwünschten Geräuschentwicklung.

Ferner ist vorteilhaft, wenn zur Montage des Codierelements das Codierelement auf den Rotor aufsteckbar ist. Vorteilhafterweise erfolgt die Montage in axialer Richtung.

Weiterhin ist es vorteilhaft, wenn das Codierelement unter Vorspannung gehalten ist. Aufgrund der Vorspannung kann gewährleistet werden, dass das Codierelement in seiner vorgegebenen Position gehalten wird. Die Vorspannung bzw. die federnde Nachgiebigkeit dient auch zum Höhenspielausgleich. Dadurch wird die Funktionsweise des Lenkstockmoduls bzw. des Lenkwinkelsensors verbessert und Abtastfehler verringert.

Weitere vorteilhafte Ausgestaltungen und Einzelheiten der Erfindung sind der nachfolgenden Beschreibung zu entnehmen, in der die Erfindung anhand der in der Zeichnung dargestellten Ausführungsbeispiele näher beschrieben und erläutert ist.

In der Zeichnung zeigen:
- Fig. 1:: einen Längsschnitt durch ein erfindungsgemäßes Lenkstockmodul in perspektivischer Ansicht;
- Fig. 2:: den Rotor mit dem Codierelement des Lenkstockmoduls gemäß Fig. 1;
- Fig. 3:: eine Explosionsdarstellung des Lenkstockmoduls gemäß Fig. 1 in Ansicht von schräg oben; und
- Fig. 4:: die der Fig. 3 entsprechende Darstellung von schräg unten.

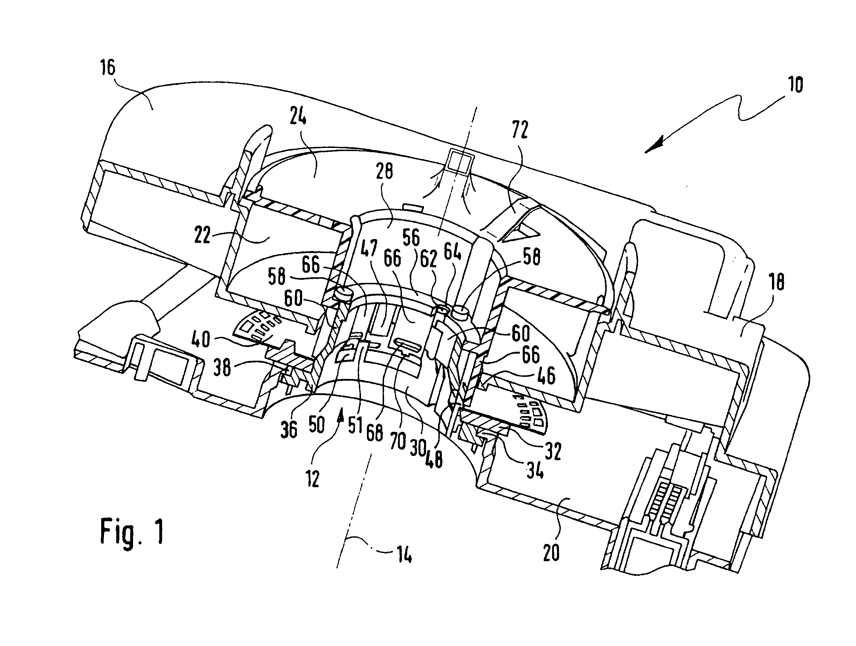

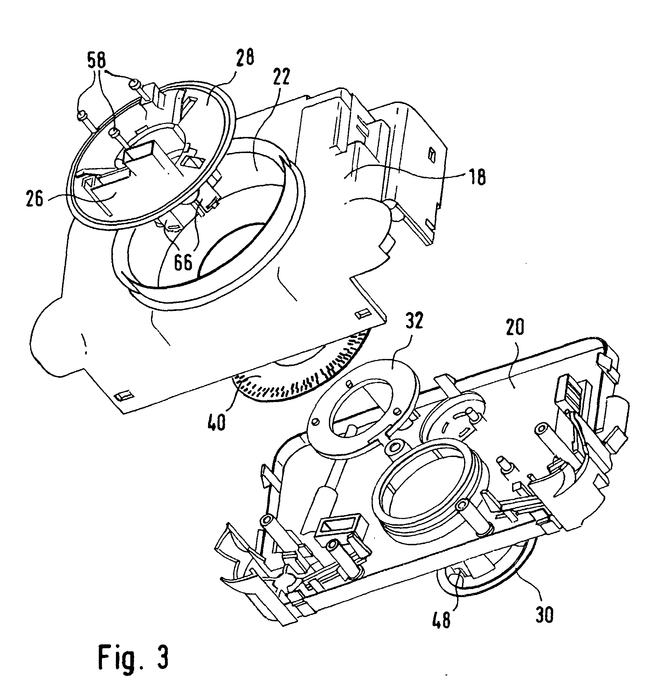

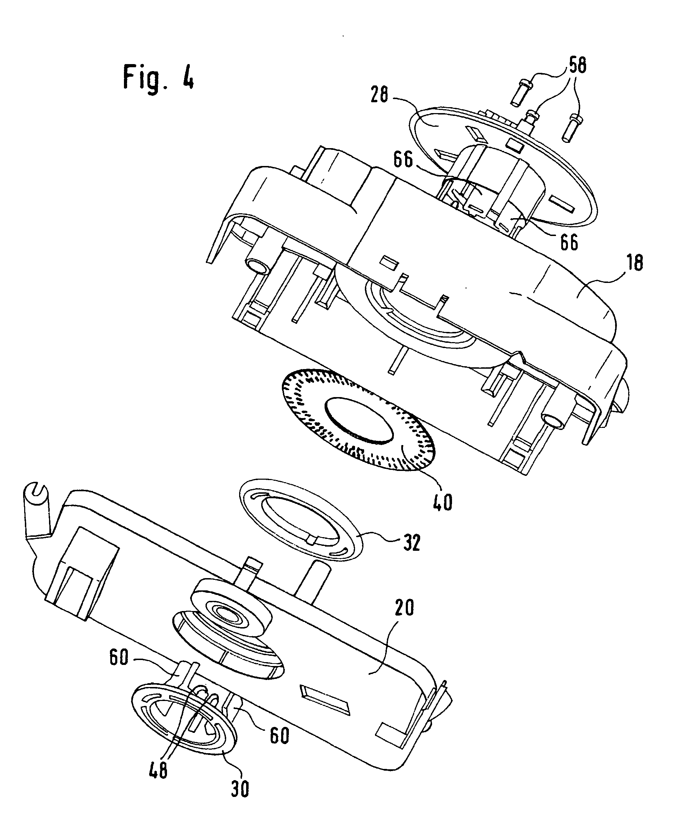

Das in der Fig. 1 gezeigte Lenkstockmodul 10 ist zur Anordnung im Bereich des Lenkstockes eines Fahrzeuges vorgesehen. Das Lenkstockmodul 10 weist einen zentralen Durchbruch 12 entlang der Achse 14 zur Aufnahme einer nicht dargestellten Lenksäule auf. Das Gehäuse 16 umfasst einen Wickelbandabschnitt 18 und einen Sensorabschnitt 20. Die beiden Gehäuseabschnitte 18 und 20 sind im unmontierten Zustand als separat voneinander handhabbare Teile ausgebildet, was aus Fig. 3 und 4 deutlich wird.

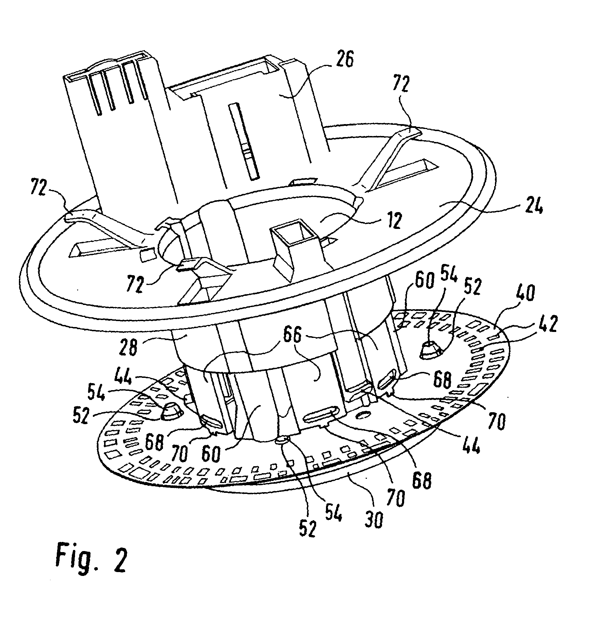

Der Wickelbandabschnitt 18 weist auf seiner dem Sensorabschnitt 20 abgewandten Seite im Bereich um den zentralen Durchbruch 12 eine Aufnahme 22 in Form einer Zylindersenkung auf. Die Aufnahme 22 dient zur Aufnahme eines um die Achse 14 spiralförmig aufgewickelten, nicht dargestellten Wickelbandes. Ein derartiges Wickelband, auch als Wickelfeder oder Kontaktspirale bezeichnet, dient zur Übertragung von elektrischen Signalen zwischen einem nicht dargestellten um die Achse 14 drehbar angeordneten Lenkrad und der Drehbewegung des Lenkrades nicht folgenden elektrischen bzw. elektronischen Bauteilen, die beispielsweise in dem Gehäuse 16 untergebracht sind. Dazu ist das eine Ende des Wickelbandes ortsfest am Gehäuse 16 bzw. am Wickelbandabschnitt 18 angeordnet. Das andere Ende des Wickelbandes ist an einem der Drehbewegung des Lenkrades folgenden Rotor 24, der am Gehäuse 16 drehbar gelagert ist, angeordnet. In der Fig. 2 ist deutlich zu erkennen, dass am Rotor 24 ein Steckerabschnitt 26 angeformt ist, der zur Aufnahme von Kontaktmitteln des nicht dargestellten Wickelbandes dient. Am Lenkrad vorhandene elektrische Bauteile können über den Steckerabschnitt 26 mit dem Wickelband kontaktiert werden.

Aus Fig. 1 wird deutlich, dass der Rotor 24 den Wickelbandabschnitt 18 berührungslos durchgreift und ausschließlich am Sensorabschnitt 20 drehbar gelagert ist. Der Rotor 24 umfasst hierbei ein die Aufnahme 22 für das Wickelband vollständig abdeckendes Rotorgrundteil 28 und einen Mitnehmer 30. Der Mitnehmer 30 ist mit einem den Mitnehmer 30 radial umgebenden Zwischenring 32 gekoppelt. Zur Lagerung des Rotors 24 sieht der Sensorabschnitt 20 im Bereich um den zentralen Durchbruch 12 einen zentrisch nach innen gerichteten, ringbundartigen Lagerabschnitt 34 vor. Der Rotor 24, bzw. der Mitnehmer 30 des Rotors 24, weist einen flanschartigen Abschnitt 36 mit einer umlaufenden Lagernut 38 zur Aufnahme des Lagerabschnitts 34 auf. Die Lagernut 38 wird in axialer Richtung durch einerseits den Mitnehmer 36 und andererseits durch den mit dem Mitnehmer 36 gekoppelten Zwischenring 32 gebildet.

Wie aus Fig. 1 und 2 zu erkennen ist, ist mit dem Rotor 24 ein Codierelement in Form einer Codescheibe 40 drehfest gekoppelt. Die der Drehbewegung des Lenkrades folgende Codescheibe 40 ist Teil eines nicht dargestellten Lenkwinkelsensors, der im Sensorabschnitt 20 des Gehäuses 16 untergebracht ist. Die Codescheibe 40 weist zwei um die Achse 14 konzentrisch angeordnete Codespuren 42 auf, die von einer nicht dargestellten Abtasteinheit abgetastet werden. Über den jeweils abgetasteten Code lässt sich der Verdrehwinkel des Rotors 24 bzw. des Lenkrades gegenüber dem Gehäuse 16 des Lenkstockmoduls 10 bestimmen.

Das in den Figuren dargestellte Lenkstockmodul 10 hat den Vorteil, dass es lediglich eine Lagerstelle 34, 38 für zum einen das Wickelband und zum anderen die Codescheibe 40 aufweist. Hierdurch kann Bauraum eingespart werden, die Herstellkosten des Lenkstockmoduls 10 gesenkt werden, die Signalgenauigkeit verbessert werden und eine Qualitätsverbesserung, insbesondere eine Geräuschreduzierung durch eine Reduzierung der Lagerstellen, erreicht werden.

Das Lenkstockmodul 10 hat ferner den Vorteil, dass es auf einfache Art und Weise montierbar ist. Hierzu kann zum einen der Wickelbandabschnitt 18 mit dem Rotor 24 bzw. dem Rotorgrundteil 28 vormontiert werden. Andererseits kann der Sensorabschnitt 20 mit der Codescheibe 40 und dem Mitnehmer 30 samt Zwischenring 32 vormontiert werden.

Zur Vormontage des Wickelbandabschnitts 18 mit dem Rotorgrundteil 28 wird das Rotorgrundteil samt Wickelfeder axial mit dem Wickelbandabschnitt 18 versteckt. Das Rotorgrundteil 28 sieht hierfür Rastmittel in Form von Rasthaken 44 vor, die in Fig. 2 zu erkennen sind, wobei diese Rasthaken 44 mit relativ großem Spiel an der radial nach innen gerichteten Unterkante 46 der Aufnahme 22 verrasten. In der Fig. 1 ist die Rückseite 47 eines Rasthakens 44 zu erkennen. Die Rasthaken 44 sind an freien Enden sich in axialer Richtung erstreckenden, in radialer Richtung elastisch nachgiebigen Raststegen angeordnet. Durch eine Vormontage des Rotorgrundteils 28 mit dem Wickelbandabschnitt 18 ist das Wickelband in der Aufnahme 22 geschützt und verliersicher untergebracht.

Zur Vormontage des Sensorabschnitts 20 mit dem Mitnehmer 30, der Codescheibe 40 und dem Zwischenring 32 wird zunächst der Mitnehmer 30 in axialer Richtung von unten in den zentralen Durchbruch 12 des Sensorabschnitts 20 eingeführt. In einem nächsten Arbeitsschritt wird der Zwischenring 32 mit der Codescheibe 40 von oben auf den Mitnehmer 30 aufgeschoben. Der Mitnehmer 30 sieht Rastmittel in Form von Rasthaken 48 vor, die zur Hinterrastung der Codescheibe 40 mit Zwischenring 32 dienen. Die Rasthaken 48 sind an der Innenseite des Mitnehmers 30 angeordnet und greifen in an den Zwischenring 32 sowie an der Codescheibe 40 vorgesehene Aussparungen 50. Ein Rasthaken 48 ist in der Fig. 1 in der Schnittebene zu erkennen. Die Rückseite 51 eines weiteren Rasthakens zeigt ebenfalls die Fig. 1. Dadurch, dass die Rathaken 48 in Aussparungen 50 am Zwischenring 32 und an der Codescheibe 40 eingreifen, wird ein Montieren der verschiedenen Einzelteile in einer nicht vorgesehenen Position unterbunden. Um ein vorgesehenes und positionsgenaues Montieren zu gewährleisten, weist die Codescheibe 40 verschiedene Zentrierbohrungen 52 auf, in die Zentrierzapfen 54 eingreifen.

Aufgrund der Rasthaken 48 des Mitnehmers werden folglich in einer Vormontageposition die Codescheibe 40 mit dem Zwischenring 32 durch den Mitnehmer 30 an dem Sensorabschnitt 20 drehbar vormontiert.

Zur Endmontage des Lenkstockmoduls 10 wird der Wickelbandabschnitt 18 mit dem Sensorabschnitt 20 gefügt. Dabei erfolgt eine drehfeste Verbindung des Rotorgrundteils 28 mit dem Mitnehmer 30. Hierzu sieht das Rotorgrundteil 28 einen zentrisch nach innen gerichteten Innenringbund 56 vor, der über Befestigungsmittel in Form von insgesamt drei Befestigungsschrauben 58 mit an dem Mitnehmer sich in Richtung des Innenringbundes 56 erstreckenden Befestigungsabschnitten 60 verbunden ist. An wenigstens einem Befestigungsabschnitt 60 ist ein Zentriermittel 62 in Form eines Zentrierzapfens vorgesehen, der zur positionsgenauen Montage des Rotorgrundteils 28 mit einer an dem Innenringbund 56 vorgesehenen Zentrieraussparung 64 zusammenwirkt.

Beim Verschrauben des Rotorgrundteils 28 mit dem Mitnehmer 30 wird die einstückig aus einem metallischen Werkstoff gebildete Codescheibe unter Vorspannung in axialer Richtung geklemmt gehaltert. Die Codescheibe, die nicht mit Kunststoff umspritzt ist, ist flach, in einer Ebene liegend ausgebildet.

Dies hat den Vorteil, dass die Codescheibe kostengünstig herstellbar ist. Ferner kann nicht der Fall eintreten, dass die metallische Codescheibe aufgrund eines Schrumpfens oder Verziehens des Kunststoffes aus ihrer ursprünglich ebenen Lage gebracht wird. Dadurch, dass gewährleistet wird, dass die Codescheibe in einer Ebene liegt, wird die Abtastgenauigkeit der Codescheibe verbessert.

Zur Halterung der Codescheibe unter einer axialen Vorspannung ist bei dem Lenkstockmodul 10 vorgesehen, dass das Rotorgrundteil 28 sich in axialer Richtung erstreckende Stege 66 aufweist, die an ihren der Codescheibe 40 zugewandten freien Enden federnd nachgiebig ausgebildet sind. Zur Realisierung einer derartigen federnden Nachgiebigkeit weisen die Stege im Bereich ihrer freien Enden Materialaussparungen 68 auf, die sich nahezu über die gesamte Breite der Stege 66 erstrecken. Auf den der Codescheibe 40 zugewandten Stirnseiten der Stege 66 sind im Querschnitt rechteckig ausgebildete Drucknasen 70 vorgesehen.

Beim Verschrauben des Rotorgrundteils 28 mit dem Mitnehmer 30 bei der Endmontage des Lenkstockmoduls 10 werden die in axialer Richtung elastisch nachgiebigen Drucknasen 70 gegen die Codescheibe 40 beaufschlagt. Die Codescheibe 40 wird folglich unter Vorspannung zwischen den Drucknasen 70 und dem Zwischenring 32 gehalten. Aufgrund der relativ hohen Anzahl der Drucknasen 70 wird die Codescheibe 40 gleichmäßig gegen den Zwischenring 32 gedrückt, wodurch ein Höhenspielausgleich stattfindet. Beim Betrieb des Lenkstockmoduls 10 wird gewährleistet, dass die Codescheibe 40 fest und eben auf dem Zwischenring 32 aufliegt.

Aus insbesondere Fig. 2 wird deutlich, dass der Rotor 24 auf der dem Gehäuse 16 abgewandten, oberen Seite Federelemente 72 in Form von nach oben abstehenden Federzungen aufweist. Die Federzungen 72, die sich in Draufsicht in radialer Richtung erstrecken und in Seitenansicht einen Winkel von ca. 45° aufweisen, dienen im montierten Zustand des Lenkstockmoduls dazu, unter Vorspannung gegen einen lenkradseitigen bzw. der Drehbewegung des Lenkrades folgenden, in den Figuren nicht dargestellten Anlageabschnitt zu wirken. Der Rotor 24, bzw. der Zwischenring 32 des Rotors 24, wird durch die Federelemente 72 gegen den ringbundartigen Lagerabschnitt 34 beaufschlagt (Figur 1), wodurch ein axiales Lagerspiel entfernt wird. Dadurch, dass sich der lenkradseitige Anlageabschnitt synchron mit dem Rotor 24 dreht, findet keine Relativbewegung zwischen dem Anlageabschnitt und dem Rotor 24 statt, und es tritt keine störende Geräuschbildung auf. Vielmehr wird gewährleistet, dass die Codescheibe 40 auch während einer Drehbewegung des Rotors 24 in ihrer axialen, vorgegebenen Position bleibt und durch eine an der Innenseite des Sensorgehäuses 20 angeordnete, nicht dargestellte Abtasteinheit abgetastet werden kann. Dadurch wird insbesondere eine Funktionsverbesserung des Lenkwinkelsensors 10 aufgrund einer höheren Signalgenauigkeit erzielt. Der Axialspielausgleich über die Federelemente 72 führt zu keinem störenden Betriebsgeräusch. Da der Rotor 24 bzw. das Rotorgrundteil 28 mit Mitnehmer 30 den Wickelbandabschnitt 18 bei einer Drehung um die Achse 14 nicht berührt, entstehen keine Schleifgeräusche.

Vorteilhafterweise ist der Rotor 24 bzw. das Rotorgrundteil 28 als Kunststoffteil ausgebildet. Dabei ist es vorteilhaft, wenn die Federzungen 72 an den Rotor 24 bzw. das Rotorgrundteil 28 angeformt sind.

## Patentansprüche

1. Lenkstockmodul (10) für ein Fahrzeug, mit einem Grundgehäuse (16), mit einem mit der Drehbewegung eines Lenkrades des Fahrzeuges koppelbaren Rotor (24), wobei der Rotor (24) am Grundgehäuse (16) drehbar gelagert ist, und wobei das Lenkstockmodul (10) einen Lenkwinkelsensor umfasst, der ein mit dem Rotor (24) drehfest gekoppeltes Codierelement (40) aufweist, **dadurch gekennzeichnet, dass** der Rotor (24) auf der dem Lenkrad zugewandten Seite als Federzungen (72) ausgebildete Federelemente aufweist, die im am Fahrzeug montierten Zustand des Lenkstockmoduls (10) dazu geeignet sind in axialer Richtung unter Vorspannung gegen einen lenkradseitigen Anlageabschnitt derart zu wirken dass der Rotor (24) in axialer Richtung gegen einen definierten Lagerabschnitt (34) am Grundgehäuse (16) beaufschlagt wird.

2. Lenkstockmodul (10) nach Anspruch 1, **dadurch gekennzeichnet, dass** der Lagerabschnitt (34) insbesondere als ein den Rotor (24) umgebender Ring, als ein oder mehrere Ringsegmente oder als Auflagestege ausgebildet sein kann.

3. Lenkstockmodul (10) nach Anspruch 1 oder 2, **dadurch gekennzeichnet, dass** die Federzungen (72) sich insbesondere in Draufsicht in radialer Richtung erstrecken und in Seitenansicht insbesondere unter einem Winkel von 5° bis 85° senkrecht zur Längsachse (14) angeordnet sind.

4. Lenkstockmodul (10) nach einem der vorhergehenden Ansprüche, **dadurch gekennzeichnet, dass** der Rotor (24) aus Kunststoff geformt ist und dass die Federelemente (72) an den Rotor (24) angeformt sind.

5. Lenkstockmodul nach einem der vorhergehenden Ansprüche, **dadurch gekennzeichnet, dass** insgesamt drei oder mehr, insbesondere äquidistant zueinander angeordnete, Federelemente (72) vorgesehen sind.

6. Lenkstockmodul (10) nach einem der vorhergehenden Ansprüche, **dadurch gekennzeichnet, dass** das Codierelement (40) als Codescheibe einstückig aus insbesondere einem metallischen Werkstoff, der nicht mit Kunststoff umspritzt ist, gebildet ist.

7. Lenkstockmodul (10) nach Anspruch 6, **dadurch gekennzeichnet, dass** das Codierelement (40) flach ausgebildet ist.

8. Lenkstockmodul (10) nach 6 oder 7, **dadurch gekennzeichnet, dass** das Codierelement unmittelbar oder mittelbar zumindest in axialer Richtung zwischen dem Rotorgrundteil (28) und dem Mitnehmer (30) geklemmt gehaltert ist.

9. Lenkstockmodul (10) nach Anspruch 6, 7 oder 8, **dadurch gekennzeichnet, dass** das Rotorgrundteil (28) mit dem Mitnehmer (30) derart gefügt ist, insbesondere verschraubt ist, dass das Codierelement (40) und gegebenenfalls das Zwischenteil (32) in axialer Richtung unter Vorspannung geklemmt gehaltert ist.

## Claims

1. A steering column module (10) for a vehicle, having a base housing (16) with a rotor (24), which can be coupled with the rotating movement of a steering wheel of the vehicle, wherein the rotor (24) is rotatably seated on the base housing (16), and wherein the steering column module (10) includes a steering angle sensor having a coding element (40) which is coupled, fixed against relative rotation, with the rotor (24), **characterized in that** the rotor (24) has spring elements on the side facing the steering wheel, which are embodied as resilient tongues (72) which, when the steering column module (10) is in the state in which it is mounted on the vehicle, are suited to act under prestress in the axial direction against a contact section on the side toward the steering wheel in such a way that the rotor (24) is urged in the axial direction toward a defined bearing section (34) on the base housing (16).

2. The steering column module (10) in accordance with claim 1, **characterized in that** the bearing section (34) can be embodied in particular in the form of a ring surrounding the rotor (24), in the form of one or several ring segments, or in the form of support strips.

3. The steering column module (10) in accordance with claim 1 or 2, **characterized in that**, in particular in a view from above, the resilient tongues (72) extend in the radial direction, and in a lateral view are arranged at an angle between 5° to 85° perpendicularly in respect to the longitudinal axis (14) in particular.

4. The steering column module (10) in accordance with one of the preceding claims, **characterized in that** the rotor (24) has been shaped from a plastic material and that the spring elements (72) are formed on the rotor (24).

5. The steering column module (10) in accordance with one of the preceding claims, **characterized in that** a total of three or more spring elements (72) is provided which, in particular, are arranged equidistantly in respect to each other.

6. The steering column module (10) in accordance with one of the preceding claims, **characterized in that** the coding element (40) is embodied in the form of a code disk as one piece made of a metallic material in particular, which is not spray-coated with a plastic material.

7. The steering column module (10) in accordance with claim 6, **characterized in that** the coding element (40) is embodied to be flat.

8. The steering column module (10) in accordance with claim 6 or 7, **characterized in that** the coding element (40) is directly or indirectly held, at least in the axial direction, clamped between the rotor base element (28) and the support (30).

9. The steering column module (10) in accordance with claim 6, 7 or 8, **characterized in that** the rotor base element (28) is connected, in particular screwed together, with the support (30) in such a way that the coding element (40) and, if desired the intermediate element (32), are kept clamped in the axial direction under prestress.

## Revendications

1. Module de colonne de direction (10) pour un véhicule automobile, avec un boîtier de base (16), avec un rotor (24) pouvant être couplé au mouvement de rotation du volant du véhicule automobile, dans lequel le rotor (24) est monté de manière rotative sur le boîtier de base (16) et dans lequel 1 le module de colonne de direction (10) comprend un capteur d'angle de braquage qui comporte un élément de codage (40) solidaire en rotation couplé au rotor (24), **caractérisé en ce que** le rotor (24) présente sur le côté tourné vers le volant, des éléments flexibles conformés en languettes flexibles (72) qui à l'état monté du module de colonne de direction (10) sur le véhicule automobile, sont destinés à agir en direction axiale, sous précontrainte, contre une zone d'appui du côté du volant, de manière à provoquer la sollicitation du rotor (24) sur le boîtier de base (16) dans la direction axiale, contre une zone de palier (34) définie.

2. Module de colonne de direction (10) selon la revendication 1 **caractérisé en ce que** la zone de palier (34) peut être conformée en particulier en bague entourant le rotor (24), en un ou plusieurs segments annulaires ou en barrettes d'appui.

3. Module de colonne de direction (10) selon l'une quelconque des revendications 1 ou 2, **caractérisé en ce que** les languettes flexibles (72) s'étendent en direction radiale, en particulier en vue de dessus, et perpendiculairement à l'axe longitudinal (14) en vue de profil, en particulier sous un angle de 5° à 85°.

4. Module de colonne de direction (10) selon l'une quelconque des revendications précédentes, **caractérisé en ce que** le rotor (24) est constitué de plastique et que les languettes flexibles (72) sont moulées sur le rotor (24).

5. Module de colonne de direction (10) selon l'une quelconque des revendications précédentes, **caractérisé en ce que** sont prévues au total trois languettes flexibles (72) ou plus, en particulier équidistantes les unes des autres.

6. Module de colonne de direction (10) selon l'une quelconque des revendications précédentes, **caractérisé en ce que** l'élément de codage (40) est conçu sous forme de disque de codage d'un seul tenant, à base d'un matériau en particulier métallique qui n'est pas enrobé de plastique par injection.

7. Module de colonne de direction (10) selon la revendication 6 **caractérisé en ce que** l'élément de codage (40) est de forme plane.

8. Module de colonne de direction (10) selon l'une quelconque des revendications 6 ou 7, **caractérisé en ce que** l'élément de codage est fixé par serrage, directement ou indirectement, au moins en direction axiale, entre la partie de base du rotor (28) et l'entraîneur (30).

9. Module de colonne de direction (10) selon l'une quelconque des revendications 6, 7 ou 8, **caractérisé en ce que** la partie de base du rotor (28) est assemblée à l'entraîneur (30), en particulier vissée, de telle sorte que l'élément de codage (40) et éventuellement la pièce intermédiaire (32) sont fixés par serrage en direction axiale sous précontrainte.
